Europäisches Patentamt

European Patent Office

Office européen des brevets

(19)

(11) **EP 0 766 205 B1**

(12) **FASCICULE DE BREVET EUROPEEN**

(45) Date de publication et mention
de la délivrance du brevet:
**03.12.2003 Bulletin 2003/49**

(51) Int Cl.$^7$: **G06T 7/00**

(21) Numéro de dépôt: **96202640.7**

(22) Date de dépôt: **20.09.1996**

(54) **Procédé et dispositif de traitement d'image, pour la détection automatique de régions d'un type prédéterminé de cancer dans une image d'intensité**

Bilverarbeitungsverfahren und -vorrichtung zur automatischen Erfassung von Bereichen eines vorbestimmten Krebstyps in einem Intensitätsbild

Image processing process and device for detecting regions with a predetermined cancer type in an intensity image

(84) Etats contractants désignés:
**DE FR GB NL**

(30) Priorité: **29.09.1995 FR 9511499**

(43) Date de publication de la demande:
**02.04.1997 Bulletin 1997/14**

(73) Titulaire: **Koninklijke Philips Electronics N.V.
5621 BA Eindhoven (NL)**

(72) Inventeurs:
• **Makram-Ebeid, Shérif, Société Civile S.P.I.D.
75008 Paris (FR)**
• **Roux, Jean-Pierre, Société Civile S.P.I.D.
75008 Paris (FR)**
• **Cohen-Solal, Eric, Société Civile S.P.I.D.
75008 Paris (FR)**

(74) Mandataire: **Lottin, Claudine et al
Société Civile S.P.I.D.
156, Boulevard Haussmann
75008 Paris (FR)**

(56) Documents cités:
**EP-A- 0 609 922          US-A- 5 260 871**

• **PROCEEDINGS OF THE 1989 INTERNATIONAL SYMPOSIUM ON NOISE AND CLUTTER REJECTION IN RADARS AND IMAGING SENSORS; IEICE, 1989, 14 Novembre 1989, pages 182-185, XP000573042 SEIJI YABASHI ET AL.: "Image processing for recognition of tumor on mammography"**

**Description**

L'invention concerne un procédé de traitement d'image, pour la détection automatique de régions d'un type prédéterminé de cancer, dans une image d'intensité d'une partie du corps humain ou animal.

L'invention concerne également un dispositif de traitement d'images pour mettre en oeuvre ce procédé, et un système de radiologie comprenant ce dispositif.

L'invention trouve son application dans le domaine de la radiologie, pour la détection automatique de cancers spécifiques appelés "opacités", dans des mammographies.

Une méthode de traitement d'images pour la reconnaissance de tumeurs dans des images mammographiques est déjà connue de la publication intitulée "Image processing for recognition of tumor in mammography" par Seiji YABASHI et alii, dans "PROCEEDINGS OF THE 1989 INTERNATIONAL SYMPOSIUM ON NOISE AND CLUTTER REJECTION IN RADARS AND IMAGING SENSORS", IEICE, 1989. Cette méthode concerne le traitement d'image d'ultrasons pour la détection d'opacités suspectes pouvant correspondre à des cancers du sein. Selon la publication citée, après numérisation de l'image d'ultrasons, des profils d'intensité f sont tracés selon les lignes de l'image numérique. Ces profils f montrent une première fonction linéaire f1 avec une pente positive correspondant à l'augmentation de l'épaisseur des tissus normaux, vers le sein profond ; des variations correspondant à des opacités modulant la fonction linéaire f1 et exprimées par une seconde fonction f2 ; et une composante horizontale continue, correspondant au fond, exprimée par une constante G. La première fonction f1 relative aux tissus normaux est d'abord lissée par un filtre médian, puis la seconde fonction f2 relative aux opacités est obtenue en soustrayant la première fonction f1 lissée et le fond G du profil d'origine f. La seconde fonction f2 est ensuite soumise à différents traitements, parmi lesquels un opérateur de Sovel et un opérateur Laplacien, faisant ainsi mieux ressortir les opacités dans l'image examinée par le praticien aux fins de diagnostic, par réhaussement du contraste des objets dans les images ou par tracé de lignes équiniveaux de gris.

Un problème est que les variations d'intensité exprimées par la seconde fonction f2 peuvent avoir différentes causes autres que les opacités suspectes correspondant à des cancers, et constituent alors ce que l'homme du métier appelle des faux positifs. La méthode connue ne propose aucune solution pour distinguer les opacités réellement dues à des cancers des opacités dues à d'autres structures du sein non-suspectes. De plus, la méthode proposée n'est pas automatique, en ce sens que le praticien doit encore examiner les images résultant du traitement, et prendre lui-même la décision de classer une région particulière en région suspecte ou non.

Le document US-A-5260871 divulgue un système de diagnostic de tumeurs dans des images mammographiques, utilisant une technique de classification basé sur les tumeurs, classifiées en tumeurs malignes et bénignes; il utilise une technique de génération de caractéristiques, de type "run length" ou de type markovien. Les valeurs numériques de plusieurs caractéristiques décrivant un tissu permettent de le classifier comme bénin ou non. Les caractéristiques sont triées en fonction de leur qualité relative comme classificateurs, selon la fréquence avec laquelle elles se sont trouvées dans des cas de tumeurs bénignes. Il est possible d'apprendre à un réseau de neurones à effectuer cette classification.

Un but de la présente invention est de fournir une méthode, pour l'aide au diagnostic, qui fournit automatiquement une détection des régions suspectes de l'image mammographique.

Ce procédé comprend, pour un nombre de points d'une partie de ladite image, la détermination d'un lot, appelé vecteur, de composantes formées de valeurs caractéristiques dérivées de la distribution d'intensité dans ladite partie de l'image autour de chaque point, et l'utilisation d'un système classificateur pour déterminer la probabilité que le point associé à ce vecteur appartienne à une région de cette partie d'image correspondant au type de cancer prédéterminé ou à une autre région.

Un avantage de la méthode proposée selon l'invention réside dans une grande précision de la détection automatique des cancers, avec un taux de vrais positifs pouvant atteindre 100 % pour un taux de faux positifs inférieur ou égal à 2 %.

Un dispositif de traitement d'images pour détecter automatiquement des régions d'un type prédéterminé de cancer dans des images d'intensité, comprend des moyens de traitement d'un nombre de points d'une partie de ladite image, pour déterminer un lot, appelé vecteur, de composantes formées de valeurs caractéristiques dérivées de la distribution d'intensité dans ladite partie de l'image autour de chaque point, et un système classificateur pour déterminer la probabilité que le point associé à ce vecteur appartienne à une région de cette partie d'image correspondant au type de cancer prédéterminé ou à une autre région.

Un avantage de ce dispositif est de fournir automatiquement au praticien des images sur lesquelles des cancers très petits sont détectés et mis en évidence.

Un autre avantage qui résulte de cette automatisation est que le traitement de l'image médicale peut se faire directement, sans intervention humaine, éventuellement en temps réel, pouvant ainsi fournir une aide appréciable au diagnostic, en fournissant rapidement au praticien des éléments importants pour un diagnostic des cancers à un stade où ces derniers sont très petits et donc extrêmement difficilement détectables par des moyens conventionnels.

L'invention est décrite ci-après en détail en référence avec les figures schématiques annexées, dont :

- la FIG.1 qui représente un diagramme de déroulement d'une première phase d'une première étape d'un procédé automatique de détection de cancers d'un type prédéterminé dans une image mammographique ;
- les FIGs.2A et 2B qui représentent respectivement un diagramme de déroulement d'une seconde phase de cette première étape, dans deux chaînes A et B ;
- la FIG.3 qui représente un diagramme de déroulement d'une troisième phase de cette première étape ;
- la FIG.4 qui représente un diagramme de déroulement d'une deuxième étape du procédé automatique ;
- les FIG.5A à 5B qui représentent les éléments d'un réseau de neurones ;
- les FIGS.6A à 6C qui représentent respectivement une image d'origine, une telle image lissée dans la première phase de la première étape de traitement, et un dessin simplifié des différentes régions d'une organe sein, montré de profil ;
- les FIGS.7A à 7F qui représentent les images d'intensité obtenues par le passage de la première série de filtres de la FIG.1 ;
- les FIGS.8A à 8C qui représentent respectivement une image mammographique initiale, une image segmentée en quatre classes, et l'image finale correspondante fournie pour repérer automatiquement les cancers ;
- les FIGS.9A à 9C qui représentent une autre image mammographique initiale, l'image segmentée en quatre classes correspondantes et l'image finale correspondante ;
- les FIGs.10A, 10B et 10C qui représentent des réponses impulsionnelles correspondant à des filtres utilisés ;
- la FIG.11 qui illustre les résultats de tests appliqués au dispositif, sur des courbes (ROC) montrant le taux de vraies alarmes TA en fonction du taux de fausses alarmes FA ;
- la FIG.12 qui montre un dispositif de formation d'images de rayons X, incluant un dispositif de prise de vue et un dispositif de traitement d'images pour traiter les images mammographiques selon un procédé automatique de détection et mise en évidence des régions d'un type prédéterminé de cancers.

LE PROCEDE

L'invention concerne un procédé de détection automatique de cancers d'un type prédéterminé, dans une image d'intensité d'une partie du corps humain ou animal, dans le but de constituer une aide au diagnostic du praticien. L'invention est décrite ci-après dans son application à la détection, dans une image mammographique, de cancers d'un type prédéterminé, appelés "opacités", à bords flous, non modélisables, par opposition à d'autres lésions spécifiques ayant une forme nette, telles que les lésions stellaires ou les microcalcifications. Le procédé s'attache à la détection de toutes les opacités du type prédéterminé présentes dans une image, sans exception, à partir des éléments présents dans cette seule image. Le procédé s'attache aussi à la détection des opacités de 3 à 4 mm de diamètre correspondant à des cancers débutants, non palpables, non visibles aux ultrasons.

L'acquisition des images mammographiques peut être faite par radiographie numérisée, mais dans tous les cas, l'invention ne tient pas compte de la méthode par laquelle l'image a été obtenue.

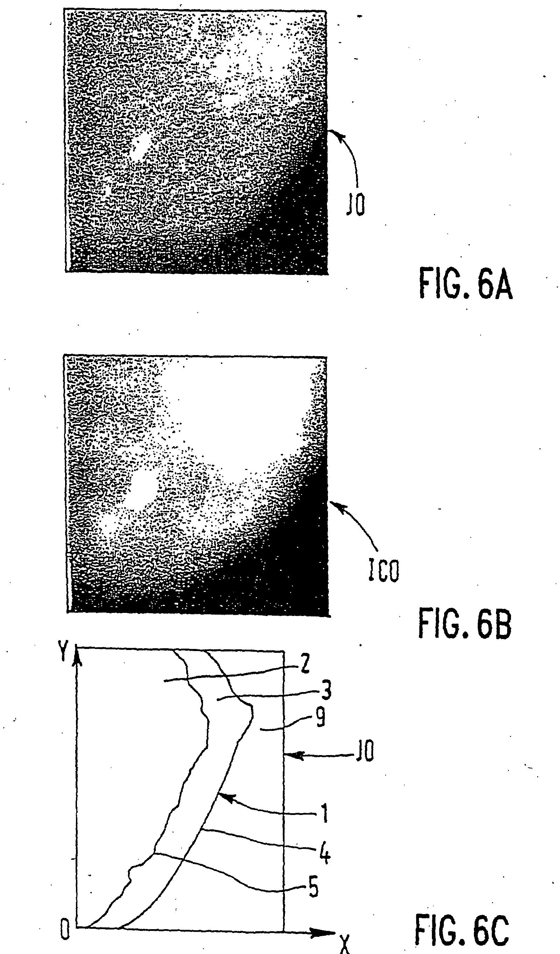

La FIG.6A représente, à titre d'exemple, une image mammographique originale J0 sous forme d'une image d'intensité arrangée en une matrice bidimensionnelle de pixels d'intensités numérisées. En réference avec la FIG.6C, le sein 1 présente, sur un fond 9, deux zones principales : un sein profond 2 d'épaisseur substanciellement constante, et un sein périphérique 3 d'épaisseur décroissant rapidement du sein profond 2 vers la peau 4.

Dans le traitement des images mammographiques pour la détection des cancers, des difficultés doivent être prises en compte, telles que:

l'organe sein 1 est radiographié de profil et ne présente pas une épaisseur constante ;
les objets à détecter sont des opacités à bords flous et se présentent comme des régions blanchâtres sur un champ constitué des autres objets du sein 1 radiographié ;
les dimensions des objets à détecter peuvent être très petites, 3 à 4 mm ;
le champ sur lequel ces opacités sont à détecter contient en outre d'autres opacités résultant de la texture ordinaire des tissus du sein 1, qui peuvent être confondues avec les cancers ;
ces opacités à détecter ont des localisations essentiellement variables dans le sein 1 ;
ces opacités à détecter ont aussi des formes et des dimensions très variables d'une image à une autre ;
les opacités correspondant à la texture des tissus normaux peuvent occulter facilement les opacités correspondant aux cancers, car la prise de vue radiographique intègre des informations contenues dans des tissus superposés ;
aucun cancer potentiel ne doit être omis ou négligé lors du traitement d'une image mammographique.

Le procédé prend en compte toutes ces difficultés.

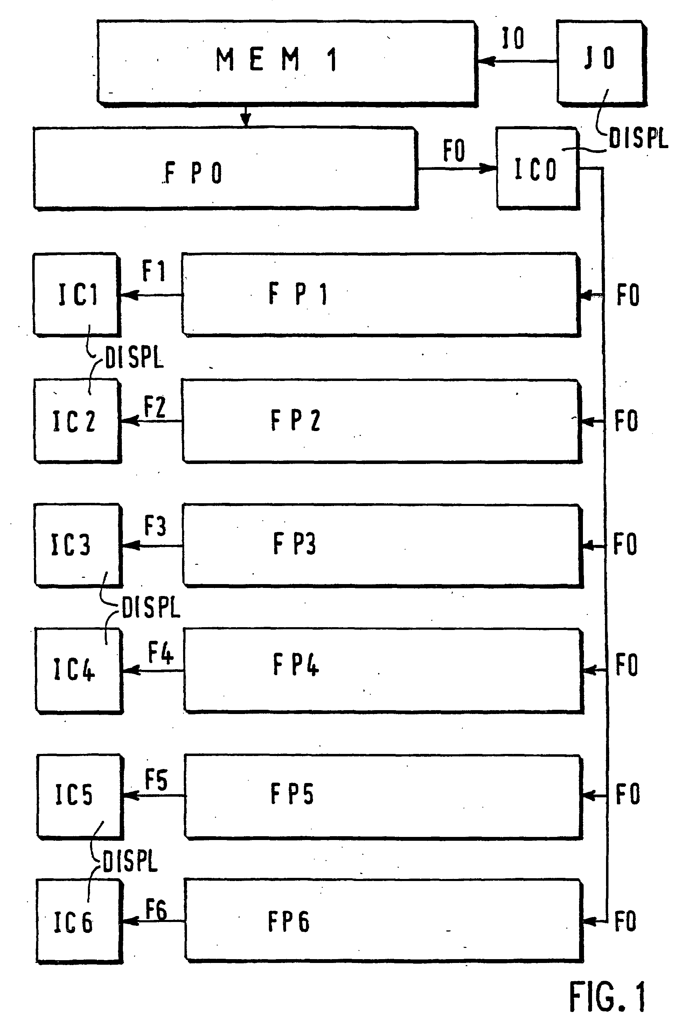

En référence avec les FIG.1 à 4, ce procédé comprend deux étapes principales : une première étape incluant, pour un nombre de points d'une partie de ladite image, la détermination d'un lot, appelé vecteur, de composantes formées de valeurs caractéristiques dérivées de la distribution d'intensité dans ladite partie de l'image autour de chaque point, et une seconde étape incluant l'utilisation d'un système classificateur pour déterminer la probabilité que le point associé à ce vecteur appartienne à une région de cette partie d'image correspondant au type de cancer prédéterminé ou à une autre région, et une segmentation et mise en évidence des cancers dans une image finale.

Un problème technique important qui se pose dans le traitement d'images de rayons X, et notamment le traitement d'images mammographiques, est que l'organe radiographié peut avoir n'importe quelle orientation dans l'image d'origine ; de plus la tumeur a des formes variables comme on l'a souligné plus haut.

L'analyse de l'image selon la présente méthode est donc fondée sur la détermination de caractéristiques de façon invariante par rotation. Ce problème est résolu en réalisant, dans la première étape du procédé, des première et seconde phases de filtrage par des opérateurs différentiels d'ordre 1 et 2 fournissant des résultats invariants par rotation. En abrégé, ces opérateurs sont appelés " invariants".

La méthode est décrite ci-après plus en détail.

I. PREMIERE ETAPE : DETERMINATION DE VECTEURS DE CARACTERISTIQUES D'INTENSITE ASSOCIES AUX PIXELS DE L'IMAGE.

I.1 PREMIERE PHASE DE FILTRAGE ( FIG.1)

Lissage préliminaire FP0

En référence avec la FIG.1, un filtrage préliminaire transforme l'image d'origine J0 en une image IC0, telle que représentée sur la FIG.6B, par un lissage à la résolution des régions tumorales à détecter et des structures locales de cette image.

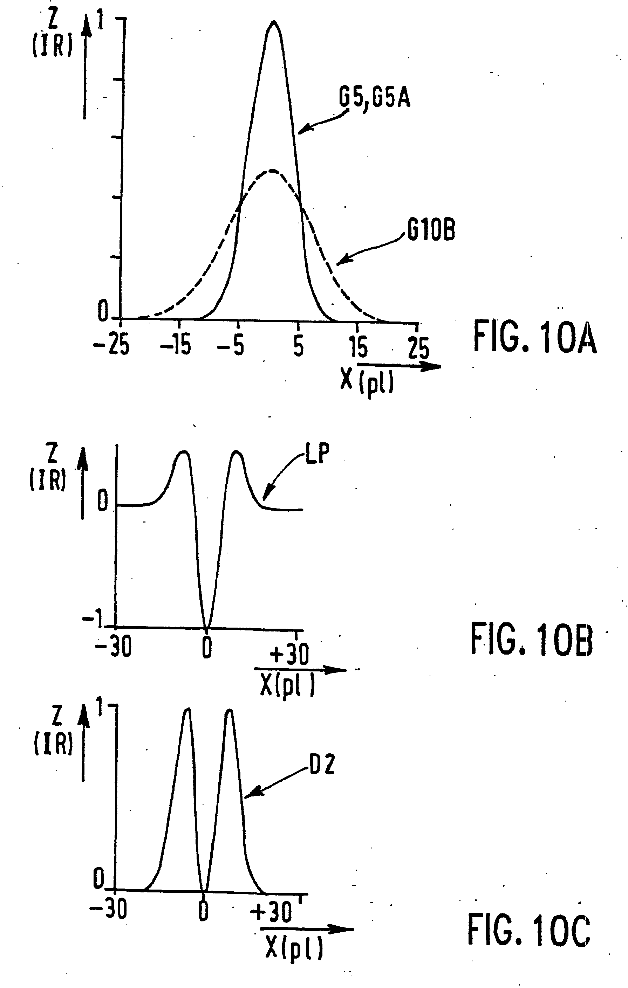

Ce lissage peut être effectué au moyen d'un filtre à noyau gaussien dont la fonction gaussienne est notée G5. La largeur du noyau de ce filtre, notée $\sigma$, est choisie de l'ordre de grandeur des objets à détecter, soit de préférence 5 pixels. Par largeur $\sigma$ du noyau d'un filtre, on entend la largeur à mi-hauteur de la réponse impulsionnelle en intensité de l'opérateur avec lequel l'intensité de l'image est convoluée pour obtenir le résultat du filtrage. La réponse impulsionnelle d'un tel filtre gaussien G5 est représentée, à titre d'exemple, en trait continu sur la FIG.10A où l'intensité est portée sur l'axe des Z en unités arbitraires.

Le passage du filtre à noyau gaussien G5 revient à effectuer, au courant P0 repéré par ses coordonnées selon des axes X et Y dans la matrice bidimensionnelle, le produit de convolution de son intensité I0 par la fonction gaussienne G5 selon la relation (1) : F0 = I0 * G5 , où le signe * symbolise le produit de convolution. La fonction gaussienne est fournie par un filtrage récursif.

Détermination de premières caractéristiques structurelles

L'image lissée IC0 est ensuite soumise à un filtrage par une série de filtres orientés invariants par rotation, pour rehausser des variations d'intensité et faire ressortir des caractéristiques structurelles dans cette image lissée à la résolution des objets à détecter. Les réponses de ces filtres fournissent des composantes du vecteur de caractéristiques recherché. Ces filtres sont par exemple formés par des opérateurs différentiels d'ordre 1 et 2, sélectionnés selon l'invention parmi les suivants :

FP1 : Module du gradient d'intensité

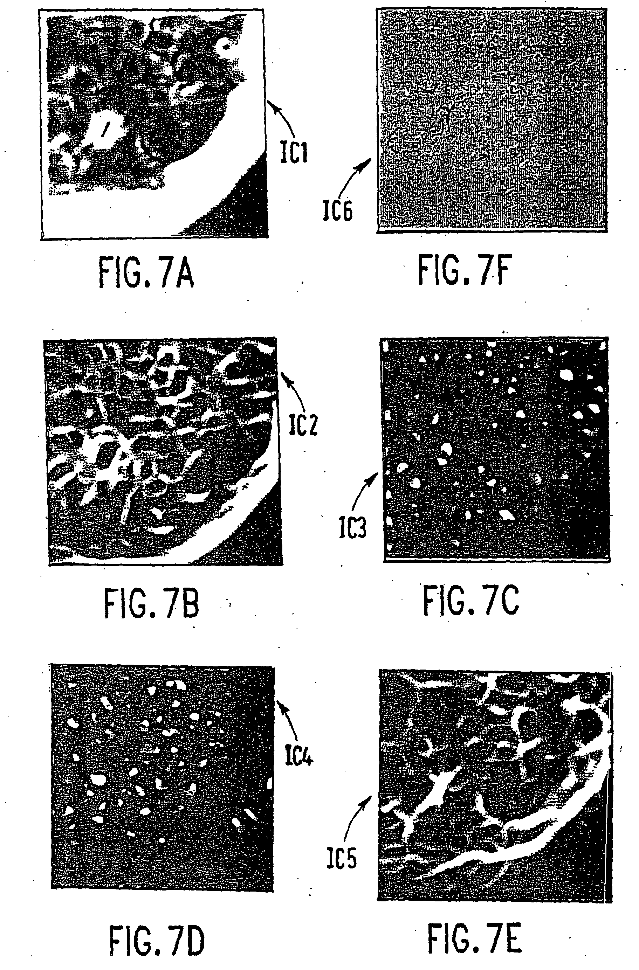

Un filtre invariant FP1 calculant le module du gradient d'intensité en chaque pixel P0 à traiter est passé sur l'image lissée IC0 pour transformer cette image en une image résultante IC1, telle que représentée sur la FIG.7A, dans laquelle les bords d'objets sont mis en évidence.

Le gradient d'intensité est noté ci-après GR1, et le module du gradient d'intensité est noté $\|GR1\|$. Le gradient d'intensité est obtenu par le calcul des dérivées d'ordre 1 de la fonction d'intensité lissée F0, selon les axes X, et Y, en chaque pixel à traiter dans l'image IC0. Le gradient d'intensité peut être obtenu par toute méthode connue de l'homme du métier. Dans une mise en oeuvre préférentielle, le gradient d'intensité GR1 peut être obtenu par le passage selon des directions parallèles aux axes des X et des Y, de filtres orientés connus sous le nom de "Sovel", et notés ci-après : $Sovel_x$ selon l'axe X ; $Sovel_y$ selon l'axe Y.

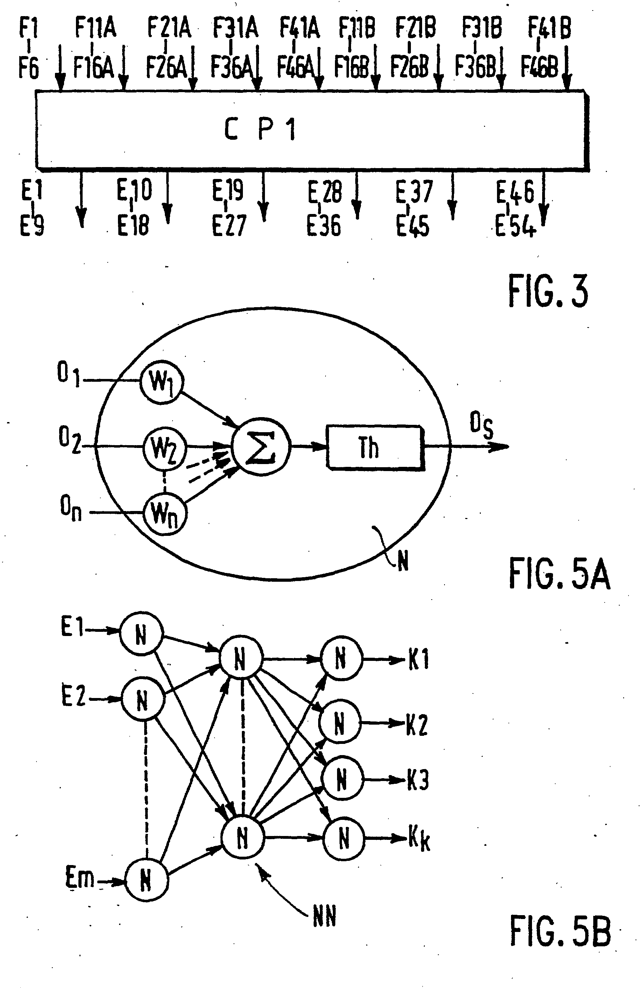

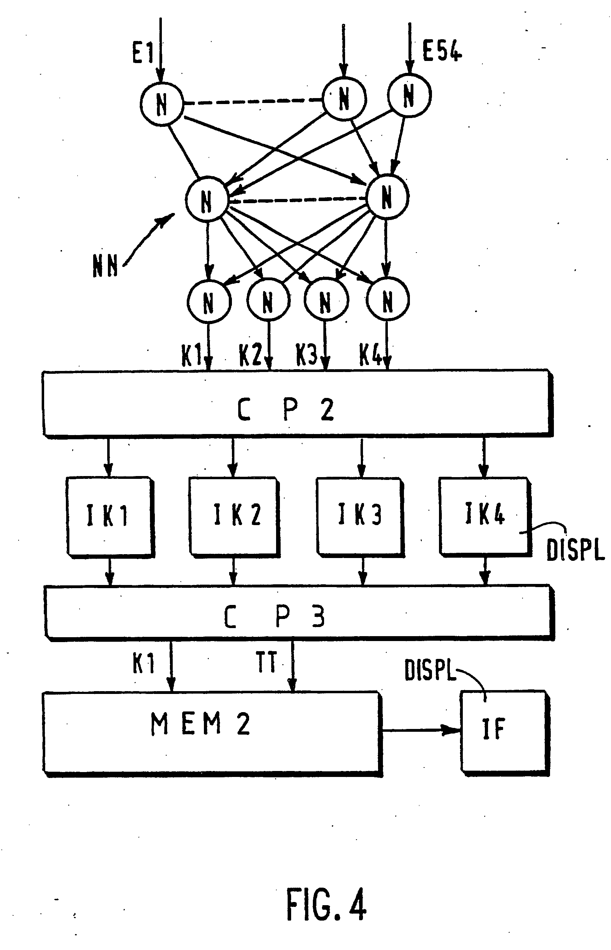

La mise en oeuvre des filtres de Sovel est décrite dans un ouvrage d'enseignement général intitulé "Computer Vision", par Dana H. Ballard et Christopher M. Brown, publié chez PRENTICE-HALL, INC., Englewood, Cliffs, New Jersey 07632, US, à la p.77, $\ell$.6 à 17 en relation avec la FIG.3.10C.

Par application des filtres $Sovel_x$ et $Sovel_y$, on obtient les gradients d'intensité $GR1_x$ et $GR1_y$, en chaque pixel courant P0, donnés respectivement par les formules :

$$GR1_x = \frac{\partial(F0)}{\partial x} = Sovel_x (F0) \text{ et } GR1_y = \frac{\partial(F0)}{\partial y} = Sovel_y (F0)$$

Le module du gradient est donné par :

$$\|GR1\| = [(GR1^2_x + (GR1^2_y)]^{1/2} \tag{2d}$$

Par le passage de ce filtre FP1, une intensité F1 = ‖GR1‖ est calculée pour les pixels P0 traités de l'image lissée IC0 et affectée à la matrice bidimensionnelle pour former la nouvelle image d'intensité IC1 de la FIG.7A.

FP2 : Valeur maximale des dérivées secondes orientées rectifiées positives

Un filtre invariant FP2, calculant les dérivées orientées maximales d'ordre 2 rectifiées positives, est passé sur l'image lissée IC0 pour transformer cette image lissée en une image résultante IC2, telle que représentée sur la FIG.7B, dans laquelle des objets filaires sombres sur fond clair sont mis en évidence.

Les dérivées d'ordre 2 de la fonction d'intensité lissée F0, sont d'abord calculées. Les dérivées d'ordre 2 en x, en y, et en xy sont notées :

$$(L1)_{xx} = \frac{\partial^2(F0)}{\partial x^2} \ ; \ (L1)_{yy} = \frac{\partial^2(F0)}{\partial y^2} \ ; \ (L1)_{xy} = \frac{\partial^2(F0)}{\partial x \, \partial y}$$

La "dérivée seconde orientée" selon un axe faisant un angle $\Theta$ avec l'axe X de l'image traitée est notée $(L1)_{\Theta\Theta}$ est ensuite calculée par la formulation (4), au moyen des dérivées d'ordre 2 précédentes.

$$(L1)_{\Theta\Theta} = \frac{1}{2}[(L1)_{xx} + (L1)_{yy}] + \frac{1}{2}[(L1)_{xx} - (L1)_{yy}] \cos 2\Theta$$

$$+ (L1)_{xy} \sin 2\Theta \tag{4}$$

Les dérivées d'ordre 2 de la fonction d'intensité F0 peuvent être obtenues par toutes méthodes connues de l'homme du métier. Dans une mise en oeuvre préférentielle, ces dérivées d'ordre 2 peuvent être obtenues par le passage, selon des directions parallèles aux axes X et Y, à nouveau de filtres orientés de Sovel, tels que $Sovel_x$ et $Sovel_y$, sur les gradients d'intensité $GR1_x$ et $GR1_y$ calculés précédemment lors du passage du filtre invariant FP1.

Par l'application desdits filtres orientés $Sovel_x$ et $Sovel_y$, on obtient les dérivées d'ordre 2 selon les formules :

$$(L1)_{xx} = Sovel_x (GR1)_x \tag{5a}$$

$$(L1)_{yy} = Sovel_y (GR1)_y \tag{5b}$$

$$(L1)_{xy} = Sovel_{xy} (GR1)_{xy} \tag{5c}$$

qui permettent de calculer la valeur de la dérivée orientée d'ordre 2, $(L1)_{\Theta\Theta}$ donnée par la formule (4).

On évalue ensuite, au pixel courant, le maximum de la dérivée seconde orientée noté $MAX_\Theta [(L1)_{\Theta\Theta}]$ fournissant une valeur d'intensité maximale qui est alors affectée à ce pixel courant, mais seulement si cette valeur est positive ; si cette valeur est négative, la valeur 0 (zéro) est affectée audit pixel courant comme valeur d'intensité en remplacement de la valeur calculée.

Cette opération de rectification positive des valeurs maximales des dérivées orientées d'ordre 2 fournit la valeur d'intensité :

$$F_2 = MAX_\theta^P [(L1)_{\Theta\Theta}]$$

qui est affectée au pixel correspondant de la matrice pour bâtir la nouvelle image d'intensité IC2.

FP3 : Valeur maximale des dérivées secondes orientées rectifiées négatives.

Un filtre invariant FP3, calculant les dérivées orientées maximales d'ordre 2 rectifiées négatives, est passé sur l'image lissée IC0 pour transformer cette image lissée en une image résultante IC3, telle que représentée sur la FIG.7C, dans laquelle des objets filaires sombres sur fond clair sont mis en évidence.

La valeur de la dérivée orientée d'ordre 2 est d'abord calculée au moyen de la formulation (4) déjà décrite. On évalue encore, au pixel courant, le maximum de cette dérivée seconde orientée noté $MAX_\Theta [(L1)_{\Theta\Theta}]$ fournissant une valeur d'intensité maximale qui est alors affectée à ce pixel courant, mais seulement si cette valeur est négative ; dans le cas où cette valeur est positive, la valeur 0 (zéro) est affectée audit pixel courant comme valeur d'intensité en remplacement des valeurs calculées.

Cette opération de rectification négative des valeurs maximales des dérivées orientées d'ordre 2 fournit la valeur d'intensité :

$$F_3 = MAX_\theta^N [(L1)_{\Theta\Theta}]$$

qui est affectée au pixel correspondant de la matrice bidimensionnelle pour bâtir la nouvelle image d'intensité IC3.

FP4 : Valeur minimale des dérivées secondes orientées rectifiées positives.

Un filtre invariant FP4, calculant les dérivées orientées d'ordre 2 minimales rectifiées positives, est passé sur l'image lissée IC0 pour transformer cette image lissée en une image résultante IC4, telle que représentée sur la FIG. 7D, dans laquelle des objets filaires claires sur fond sombre sont mis en évidence.

On reprend, au pixel courant, la valeur déjà évaluée de la dérivée seconde orientée au moyen de la formulation (4). Puis on évalue maintenant, audit pixel courant, le minimum de cette dérivée seconde orientée noté $MIN_\Theta [(L1)_{\Theta\Theta}]$ fournissant une valeur d'intensité minimale qui est affectée à ce pixel courant, mais seulement si cette valeur est positive ; dans le cas où cette valeur est négative, la valeur 0 (zéro) est affectée-audit pixel courant comme valeur d'intensité en remplacement de la valeur calculée.

Cette opération de rectification positive des valeurs minimales des dérivées orientées d'ordre 2 fournit l'intensité :

$$F_4 = MIN_\theta^P [(L1)_{\Theta\Theta}]$$

qui est affectée au pixel correspondant de la matrice bidimensionnelle pour bâtir la nouvelle image d'intensité IC4.

FP5 : Valeur minimale des dérivées secondes orientées rectifiées négatives.

Un filtre invariant FP5, calculant les dérivées orientées d'ordre 2 minimales rectifiées négatives, est passé sur l'image lissée IC0 pour transformer cette image lissée en une image résultante IC5, telle que représentée sur la FIG.7E, dans laquelle des objets filaires clairs sur fond sombre sont mis en évidence.

On reprend en chaque pixel, la valeur déjà évaluée de la dérivée seconde orientée au moyen de la formulation (4). Puis on évalue encore, au pixel courant, le minimum de cette dérivée seconde orientée noté $MIN_\Theta [(L1)_{\Theta\Theta}]$ fournissant une valeur d'intensité minimale qui est affectée à ce pixel courant, mais seulement si cette valeur est négative ; dans le cas où cette valeur est positive, la valeur 0 (zéro) est affectée audit pixel courant comme valeur d'intensité en remplacement de la valeur calculée.

Cette opération de rectification négative des valeurs minimales des dérivées orientées d'ordre 2 fournit l'intensité :

$F_5 = MIN_\theta^N[(L1)_{\Theta\Theta}]$ qui est affectée au pixel correspondant de la matrice bidimensionnelle pour bâtir une nouvelle image d'intensité IC5.

Par la méthode de rectification adoptée dans les filtrages invariants FP2, FP3, FP4, FP5, on a introduit une non-linéarité dans des filtres autrement linéaires. Cette opération est une rectification "demi-onde". Cette méthode permet de séparer les réponses positives des filtres, des réponses négatives des mêmes filtres, et d'éliminer des réponses plates dans le cas où l'image à traiter comporte des objets striés, et donc de mettre en évidence de fins détails dans des objets, respectivement dans une image des réponses positives et dans une image des réponses négatives.

FP6 : Produit de la courbure d'un objet de l'image lissée IC0 par le gradient d'intensité.

Un filtre invariant FP6, calculant une intensité F6 égale au produit de la courbure K, au voisinage du pixel courant, par le module du gradient $\|GR1\|$ d'intensité, est passé sur l'image lissée IC0 pour transformer cette image lissée en une image résultante IC6, telle que représentée sur la FIG.7F, dans laquelle des variations brusques de courbures, telles que des coins, sont mises en évidence.

Le module $\|GR1\|$ du gradient d'intensité au pixel courant $P_0$ est d'abord calculé comme décrit précédemment.

La courbure, notée K, au voisinage de ce pixel courant $P_0$ est donnée par la formule (7) :

$$K = \frac{(GR1)_y^2(L1)_{xx} - 2(GR1)_x(GR1)_y(L1)_{xy} + (GR1)_y^2(L1)_{yy}}{((GR1)_x^2 + (GR1)_y^2)^{3/2}} \qquad (7)$$

La courbure K est donc aisément calculable par application des formules (3a) et (3b) dans la formule (7) puis le produit de la courbure K par le module du gradient (2) est calculé par la formule (8) donnant une valeur d'intensité $F_6$ :

$$F6 = K \times \|GR1\| \qquad (8)$$

A l'issue du passage de la première série de filtres FP1 à FP6, pour chaque pixel $P_0$ d'intérêt, à une adresse donnée, on retient :

Un premier lot de 6 caractéristiques d'intensité constituées par les intensités F1 à F6 prélevées à cette adresse dans les images IC1 à IC6 bâties lors de cette première phase par la première série de filtres invariants qui mettent en évidence des structures fines très locales de l'image, et constituent des mesures caractéristiques de ces structures fines locales.

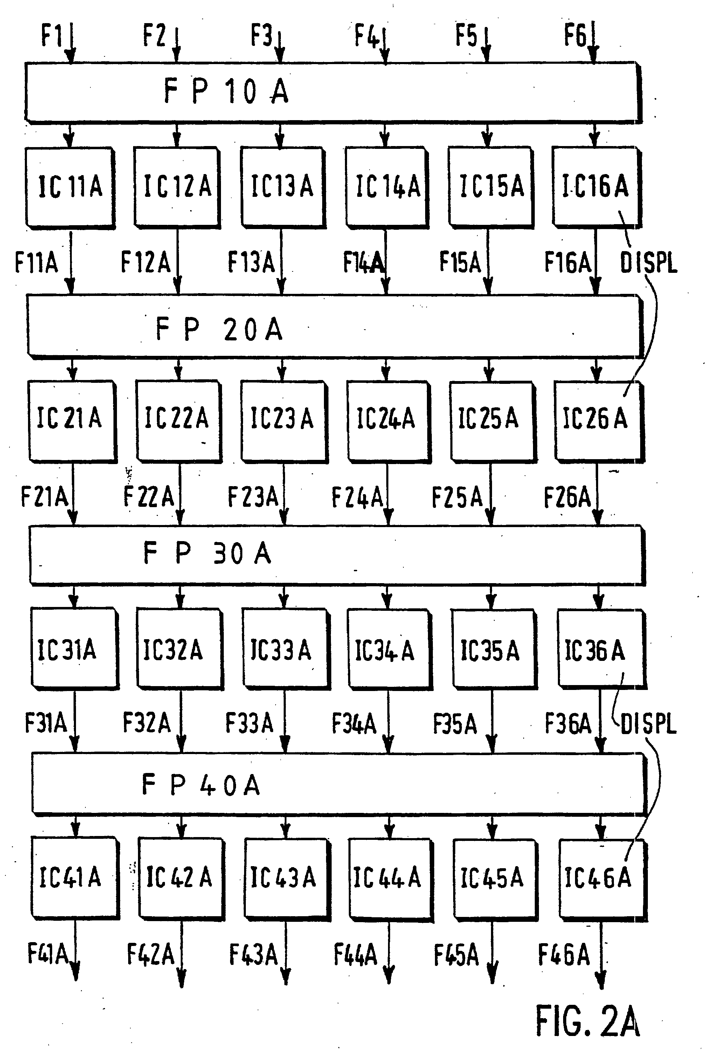

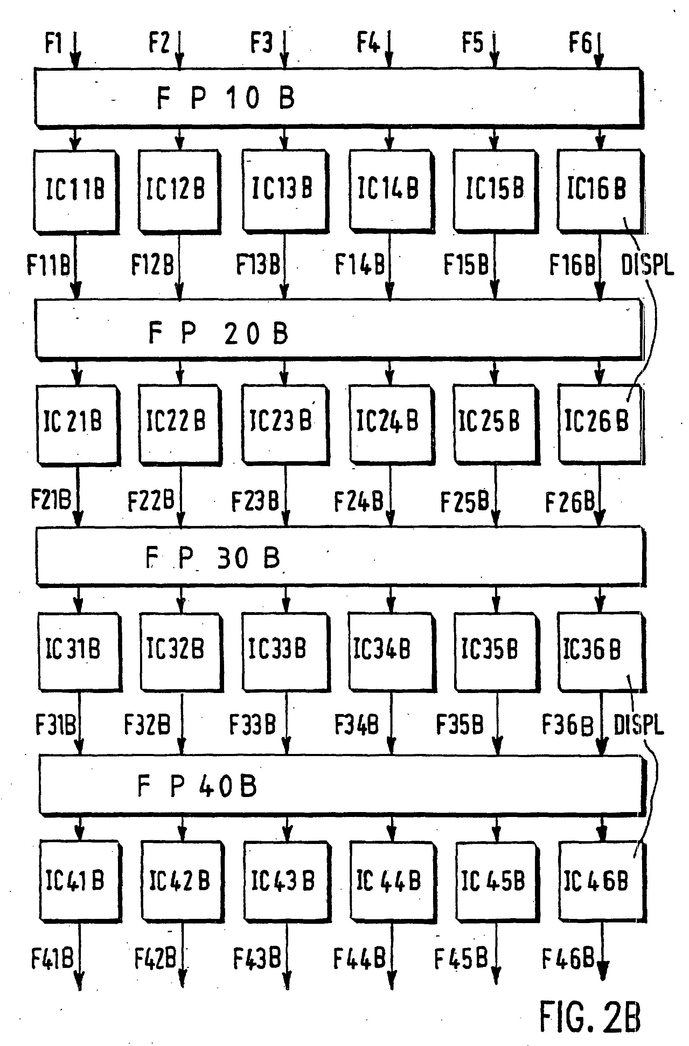

I.2 DEUXIEME PHASE DE FILTRAGE ( FIG.2A, 2B )

Dans une seconde phase décrite ci-après, le procédé met en évidences des structures globales dans l'image en effectuant une sommation de toutes les mesures locales précédemment calculées, pour obtenir des mesures caractéristiques des structures globales.

Cette seconde phase de la première étape comprend, non exclusivement, mais de préférence, le déroulement de 2 chaînes A et B respectivement de sous-étapes en parallèle.

Lissage préliminaire FP10A, FP10B

Dans cette sous-étape préliminaire, les 6 images IC1 à IC6 bâties précédemment sont maintenant chacune soumises en parallèle à un lissage à une première et à une seconde résolutions respectivement. A cet effet, des filtres orientés à noyaux gaussions, notés G5A et G10B respectivement dans les chaînes A et B, sont passés parallèlement aux axes X et Y sur chacune des six images d'intensité IC1 à IC6.

Dans la première chaîne A, le noyau du filtre gaussien est à l'échelle des tumeurs, par exemple σ = 5 pixels. La fonction gaussienne correspondante est notée G5A.

Dans la seconde chaîne B, le noyau du filtre gaussien est à l'échelle des tissus enrobant les tumeurs, par exemple σ = 10 pixels. La fonction gaussienne correspondante est notée G10B.

A l'issue de cette sous-étape préliminaire, pour chaque pixel $P_0$ courant à une adresse donnée, on retient :

un deuxième lot de 6 caractéristiques d'intensité constituées par des fonctions d'intensité F11A à F16A résultant du produit de convolution de la première fonction gaussienne G5A par les fonctions d'intensité respectivement F1 à F6 prélevées à cette adresse donnée dans chacune desdites images IC1 à IC6 et exprimées par les 6 relations :

F11A = G5A * F1, pour bâtir une image IC11A, jusqu'à
F16A = G5A * F6, pour bâtir une image IC16A

un troisième lot de 6 caractéristiques d'intensité constituées par des fonctions d'intensité notées F11B à F16B résultant du produit de convolution de la seconde fonction gaussienne G10B par les fonctions d'intensité respectivement F1 à F6 prélevées à cette adresse donnée dans chacune desdites images IC1 à IC6 et exprimées par les 6 relations :

F11B = G10B * F1, pour bâtir une image IC11B, jusqu'à
F16B = G10B * F6, pour bâtir une image IC16B

A l'issue de cette première sous-étape, chaque pixel à traiter est donc maintenant muni de 3 x 6 = 18 caractéristiques d'intensité, et ce traitement permet de bâtir à partir de chacune des 6 images IC1 à IC6 produites par la première phase, deux nouvelles images lissées respectivement correspondantes, non représentées, telles que IC11A et IC11B jusqu'à IC16A etIC16B.

Détermination de secondes caractéristiques structurelles

A l'issue de cette sous-étape préliminaire FP10A, FP10B, les 12 images lissées qui viennent d'être définies IC11A à IC16A et IC11B à IC16B sont soumises chacune à une série de filtres supplémentaires qui sont choisis parmi des invariants différentiels par rotation.

Ainsi, dans cette seconde phase, par le passage de cette seconde série de filtres, de FP20A à FP40A, et de FP20B à FP40B, le procédé permet une estimation de la répartition spatiale des structures locales précédemment mises en évidence dans la première phase et fournit des mesures caractéristiques de cette répartition spatiale, résultant en des mesures caractéristiques des structures globales de l'image traitée. Le passage des filtres F30A, F40A, et F30B, F40B met en évidence des extrema d'intensité dans les images, aux deux échelles générées par les filtrages gaussiens F10A, F10B.

FP20A et FP20B: filtre module du gradient d'intensité.

Le passage des filtres F20A, F20B met en évidence des variations d'intensité dans les images aux deux échelles générées par les filtrages gaussiens précédent F10A, F10B.

Le gradient d'intensité est noté ci-après GR2A et GR2B respectivement pour les chaînes A et B, et le module du gradient d'intensité est noté $\|GR2A\|$ et $\|GR2B\|$. Ces notations sont en outre affectées d'un indice 1 à 6 selon l'indice de l'image traitée.

On définit ainsi 6 nouvelles fonctions d'intensité en calculant le module du gradient appliqué aux fonctions d'intensité F11A à F16A, selon des formules $\|GR21A\|$ à $\|GR26A\|$.

De manière analogue, on définit 6 fonctions d'intensité supplémentaires en calculant le module du gradient appliqué aux fonctions d'intensité F11B à F16B selon des formules $\|GR21B\|$ à $\|GR26B\|$.

Par le passage de ces filtres invariants différentiels FP20A, FP20B sur les 2 x 6 fonctions d'intensité définies précédemment, on obtient respectivement

un quatrième lot de 6 caractéristiques invariantes par rotation par pixel repéré par une adresse dans la matrice bidimensionnelle, notées : F21A = $\|GR21A\|$ à F26A = $\|GR26A\|$ et un cinquième lot de 6 caractéristiques notées F21B = $\|GR21B\|$ à F26B = $\|GR26B\|$ résultant du passage d'un opérateur de calcul de module du gradient respectivement sur les 12 fonctions d'intensité F11A à F16A et F11B à F16B.

FP30A et FP30B : Filtre Laplacien isotropique

Le Laplacien isotropique, noté LPA et LPB pour les chaînes A et B respectivement, est obtenu par la composition des dérivées à l'ordre 2, selon la relation générale :

$$LP = \frac{1}{2}\left[(L2)_{xx} + (L2)_{yy}\right] \tag{30}$$

La forme générale de la courbe de réponse IR en intensité d'un filtre ayant pour fonction la formulation générale LP est donnée sur la FIG.10B, dans une représentation comparable à celle de la FIG.10A.

Les dérivées d'ordre 2, $(L2)_{xx}$ en x, et $(L2)_{yy}$ en y sont maintenant appliquées aux 12 fonctions d'intensités F11A à F16A et F11B à F16B respectivement définies dans les sous-étapes préliminaires FP10A, FP10B.

On calcule ainsi d'une part 6 Laplaciens isotropiques, appliqués aux fonctions d'intensité F11A à F16A, pour fournir les intensités notées F31A = LP1A à F36A = LP6A, selon des relations LP1A à LP6A mettant en oeuvre là formule (30), où les indices 1 à 6 correspondent aux indices des images traitées par le Laplacien isotropique.

Pour les fonctions d'intensité F11B à F16B, les Laplaciens isotropiques sont calculés de manière analogue et fournissent les fonctions d'intensité notées F31B = LP1B à F36B = LP6B.

Dans ces expressions, les dérivées d'ordre 2 sont données par des relations analogues aux formules (5a) à (5c) décrites antérieurement.

Par le passage de ces filtres invariants différentiels FP30A, FP30B sur les 12 fonctions d'intensité F11A à F16A, F11B à F16B, on obtient :

un sixième et septième lot de respectivement 6 caractéristiques d'intensité notées: F31A à F36A et F31B à F36B invariantes par rotation, par pixel repéré par une adresse dans la matrice bidimensionnelle de pixels d'axes X, Y, résultant du passage sur les 12 fonctions d'intensité d'un opérateur de calcul de Laplacien isotropique.

FP40A et FP40B : composition de dérivées d'ordre 2

Ces filtres sont appliqués sur chacune des 12 intensités F11A à F16A et F11B à F16B calculées dans la sous-étape préliminaire FP10A, FP10B.

Cette composition de dérivées d'ordre 2 est calculée selon la relation générale :

$$D2 = [(Q2)^2 + (S2)^2]^{\frac{1}{2}} \tag{40}$$

La forme générale de la courbe de réponse IR en intensité d'un filtre ayant pour fonction la formulation générale D2 est donnée sur la FIG.10C, dans une représentation comparable à celle de la FIG.10A.

Dans cette relation (40), Q2 et S2 sont des dérivées d'ordre 2 définies par les relations générales :

$$Q2 = \frac{1}{2} [(L2)_{xx} + (L2)_{yy}] \text{ et } S2 = (L2)_{xy}$$

On calcule ainsi 6 dérivées d'ordre 2 notées Q21A à Q26A, et 6 autres dérivées d'ordre 2 notées S21A à S26A appliquées aux fonctions d'intensité F11A à F16A données par :

$$Q21A = \frac{1}{2} [(L21A)_{xx} - (L21A)_{yy}]$$

à

$$Q26A = \frac{1}{2} [(L26A)_{xx} - [(L26A)_{yy}]$$

et

$$S21A = (L21A)_{xy} \text{ à } S26A = (L26A)_{xy}$$

Les dérivées d'ordre 2 des fonctions d'intensité F11A à F16A sont obtenues à l'aide des formules (5a) à (5c) déjà décrites.

La façon de parvenir aux gradients $(GR21A)_x$ à $(GR26A)_x$ et aux gradients $(GR21A)_y$ à $(GR26A)_y$ est déjà décirite à propos de l'invariant FP20A, FP20B.

A l'aide de ces relations, on calcule directement l'invariant différentiel FP40A appliqué sur les 6 fonctions d'intensité F11A à F16A, donnant les fonctions d'intensité F41A à F46A en appliquant la relation (40).

On calcule ensuite 6 dérivées d'ordre 2 notées Q21B à Q26B, et 6 autres dérivées d'ordre 2 notées S21B à S26B appliquées aux fonctions d'intensité F11B à F16B également à l'aide de la relation (40).

Les dérivées d'ordre 2 (L21B)xx à $(L26B)_{xx}$, et (L21B)yy à (L26B)yy, et en outre $(L21B)_{xy}$ à $(L26B)_{xy}$, des fonctions d'intensité F11B à F16B, sont obtenues de préférence par les relations (5a) à (5c).

La façon de parvenir aux gradients $(GR21B)_x$ à $(GR26B)_x$ et aux gradients $(GR21B)_y$ à $(GR26B)_y$ est déjà décrite à propos de l'invariant FP20A, FP20B.

A l'aide de ces relations, on obtient directement l'invariant différentiel FP40B appliqué sur les 6 fonctions d'intensité F11B à F16B, donnant les fonctions d'intensité F41B à F46B selon la formule (40).

Par le passage du filtre invariant différentiel d'ordre 2, FP40A, FP40B sur les 12 fonction d'intensité F11A à F16A et F11B à F16B, on obtient :

un huitième et un neuvième lot de respectivement 6 caractéristiques d'intensité notées: F41A à F46A et F41B à F46B invariantes par rotation, pour chaque pixel repéré par une adresse dans la matrice bidimensionnelle de pixels d'axes X,Y, résultant du passage, sur ces 12 fonctions d'intensité, d'un opérateur de calcul d'une composition particulière des dérivées d'ordre 2.

I.3 TROISIEME PHASE ( FIG.3) DE REGROUPEMENT DES CARACTERISTIQUES EN VECTEURS

A l'issue des première et seconde phases, on a donc défini pour des pixels d'intérêt ayant une adresse dans la matrice bidimensionnelle, 9 lots de 6 caractéristiques soit en tout 54 caractéristiques d'intensité qui mettent en évidence des détails de forme, par exemple forme filaire ou forme diffuse ; d'intensité, par exemple clair ou sombre ; de contour par exemple courbure accentuée ou faible ou forme de coins ; et ceci en outre, de préférence à la fois à la résolution de tumeurs (chaîne A) et à la résolution de tissus environnant (chaîne B).

Il faut bien noter que le nombre de 54 caractéristiques déterminées par la méthode précédente et les filtres utilisés pour y parvenir ont été donnés à titre tout à fait exemplatif.

En référence avec la FIG.3, des moyens de calcul CP1, groupent les 9 caractéristiques d'intensité issues des 9 images d'indice 1, les 9 caractéristiques d'intensité issues des 9 images d'indice 2..., jusqu'au 9 caractéristiques d'intensité issues des 9 images d'indice 6 ; c'est-à-dire, en partant des 6 images IC1 à IC6, ces moyens de calcul regroupent 9 sortes de caractéristiques différentes dues aux différents résultats des sous-étapes de traitement, découlant de ces 6 images et y compris les caractéristiques desdites 6 images.

Ces moyens de calcul CP1 rassemblent ces 54 caractéristiques d'intensité par pixel pour former des vecteurs de 54 caractéristiques d'intensité, qui sont d'abord mesurés pour chaque pixel décrété d'intérêt dans des images déjà examinées sur le plan médical et dans lesquelles le praticien a reconnu par lui-même les zones de tumeurs malignes et les zones saines. Ces vecteurs servent alors à l'apprentissage d'un réseau de neurones, puis aux test de validité de classification par ce réseau de neurones.

On a jusqu'ici exprimé que les calculs étaient effectués pour chaque pixel de l'image d'origine : il faut entendre par là, qu'une sélection préliminaire de pixels d'intérêt peut être faite dans l'image d'origine, ou bien que l'image d'origine peut être une zone d'intérêt prélevée dans une image plus grande.

Cette même méthode de détermination de 54 caractéristiques par pixel est ultérieurement aussi mise en. oeuvre pour la détection automatique de zones cancers dans des images non préalablement soumises à un diagnostic médical à. l'aide du même réseau de neurones ayant subi cet entraînement.

A l'issue des filtrages récursifs formant les opérateurs différentiels dans les phases 1 et 2 du procédé, les moyens de calcul CP1 ont donc généré un vecteur de m = 54 caractéristiques par pixel d'intérêt. On peut aussi dire que l'on a formé 54 images constituées de ces m caractéristiques.

## II) DEUXIEME ETAPE : DETECTION ET MISE EN EVIDENCE DES ZONES CANCERS

## II.1) PREMIERE PHASE : CLASSIFICATION PAR NN.

Les moyens de calcul CP1 ont codé ainsi une image d'une façon qui est compatible avec les entrées d'un système classificateur tel que, par exemple, un réseau de neurones ; ce codage va permettre d'introduire toutes les informations représentant au réseau de neurones comment l'intensité, à la résolution donnée, varie, autour d'un pixel donné, en fonction des axes x et y dans les diverses régions des images et, parmi ces régions, dans des régions spécifiques d'un intérêt particulier pour le praticien. Ce codage est adapté au réseau de neurones de manière à ce qu'il puisse effectuer une classification des pixels d'intérêt dans 4 classes K1 à K4 de façon efficace. Par classification, on entend que le réseau de neurone NN affecte à chaque pixel une première valeur de probabilité d'appartenir à la classe K1, une seconde valeur probabilité d'appartenir à la classe K2, une troisième valeur probabilité d'appartenir à la classe K3, et une quatrième valeur probabilité d'appartenir à la classe K4. Ces informations sont suffisantes pour construire une image de probabilité pour chaque pixel d'intérêt d'appartenir à ces 4 classes définies ci-après:

K1:    Classe des zones cancers
K2:    Classe des opacités uniformes non suspectes
K3:    Classe des régions du sein périphérique
K4:    Autres régions

Lorsque le vecteur de m caractéristiques a été défini pour chacun des pixels d'intérêt de l'image d'origine, ce vecteur est présenté, en référence avec la FIG.4, à l'entrée d'un réseau de neurones référencé NN, ayant un même nombre m d'entrées référencées $E_1$ à $E_m$, une seule couche cachée de 40 neurones et un nombre k de sorties égal à celui des classes de diagnostic, soit ici 4 sorties référencées K1 à K4.

En référence avec les FIG.5A et 5B, un réseau de neurones est composé de plusieurs éléments de calcul appelés neurones N arrangés en couches. Chaque élément ou neurone N fournit une sortie $0_S$ et peut recevoir une ou plusieurs entrées $0_1$, $0_2$, etc. La sortie est activée lorsque la somme Σ des entrées pondérées par des poids W1, W2, etc... dépasse une certaine fonction de seuil Th appelée fonction d'activation..

Un réseau de neurones est soumis à une phase d'apprentissage pour laquelle une base de données est nécessaire. Dans le procédé proposé, ces données sont prélevées dans un certain nombre de parties d'images mammographiques pathologiques déjà examinées par un praticien, et consistent en une pluralité de vecteurs de caractéristiques relatifs à des points appartenant à des régions de ces images, déjà connues comme régions de cancer ou régions saines. Durant cet apprentissage, ces vecteurs de caractéristiques sont fournis aux entrées du réseau de neurones. Les poids du réseau de neurones sont alors fixés pour que ce réseau classifie chaque points de manière correcte en point appartenant à une région du cancer spécifique notée "zone cancer" ou en point appartenant aux différentes autres régions de la mammographie exemptes de cancer.

A l'issue de la phase d'apprentissage du réseau-de neurones, ces mêmes étapes du procédé sont appliquées à des images nouvelles, non préalablement examinées, pour classifier automatiquement les pixels en zones du même type prédéterminé que les zones fournies pour l'apprentissage.

Chaque pixel d'intérêt est ainsi doté de 4 valeurs de probabilités représentant la probabilité que ce pixel a de. se trouver dans chaque classe de diagnostics K1 à K4.

## III.2) DEUXIEME PHASE CP2 DE SEGMENTATION EN 4 CLASSES

En référence avec la FIG.4, en sortie de ce réseau de neurone NN, à la place de l'image d'origine formée des pixels d'intérêt sélectionnés, on obtient des valeurs de probabilité PK1 à PK4, permettant de construire 4 images dites d'activation IK1 à IK4 qui représentent chacune le résultat de la fonction d'activation de la sortie correspondante K1 à K4 du réseau de neurone.

Dans cette deuxième phase, en sortie du réseau de neurones, les pixels sont étiquetés et regroupés en régions correspondant à chacune des classes K1 à K4, par des moyens de calculs CP2. Ainsi, tous les pixels d'une classe dont la valeur de probabilité est supérieure à un seuil prédéterminé sont étiquetés comme appartenant à cette classe et sont regroupés selon des critères de proximité.

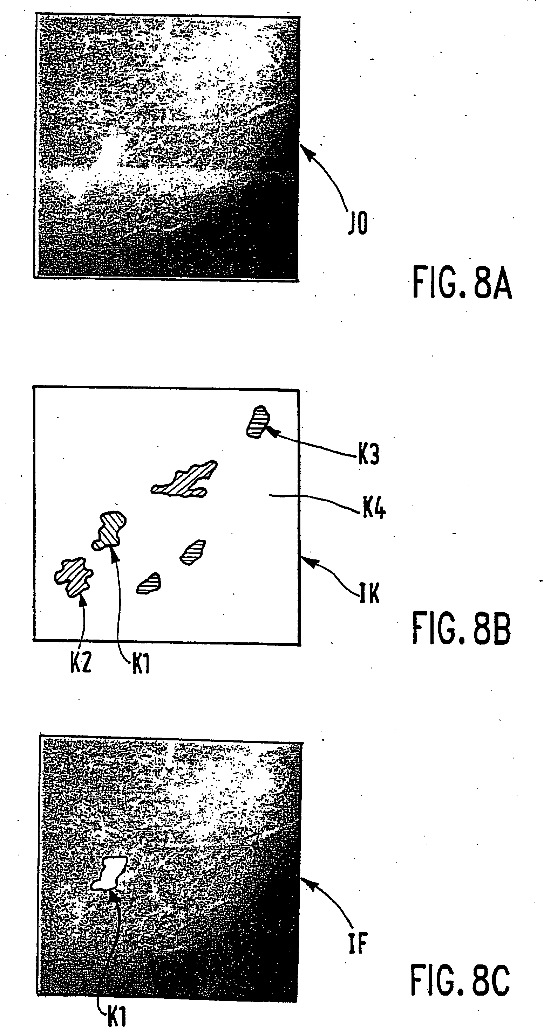

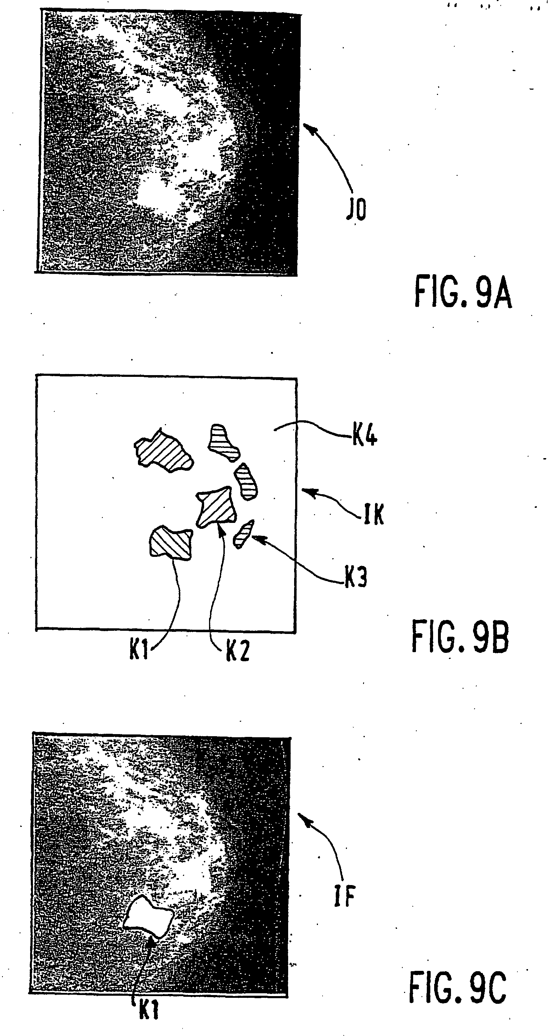

La FIG.8A montre à titre d'exemple une image d'intensité numérisée J0 relative à un premier cas pathologique. La FIG.8B montre une image d'activation IK regroupant, pour la simplicité du dessin, les éléments des 4 images d'activation IK1 à IK4 de la FIG.4, pour mettre en évidence les régions formées de pixels ayant une forte valeur de probabilité dans les 4 classes K1 à K4 de sortie du réseau de neurones. A cet effet, tous les pixels de l'image J0 sont dotés en sortie du réseau de neurones d'une certaine valeur de probabilité d'appartenir à chacune des 4 classes. Pour construire cette image d'activation de la FIG.8B, on a décidé, a priori, qu'un pixel faisait partie d'une classe donnée si sa valeur de probabilité d'appartenir à cette classe était supérieure ou égale à 40 %. Ce choix peut être plus ou moins sévère. La FIG.9A montre, comme second exemple, une autre image d'intensité J0 relative à un autre cas pathologique. La FIG.9B montre une image d'activation IK regroupant, comme précédemment les éléments des 4 images d'activation IK1 à IK4 de la FIG.4, pour mettre en évidence les régions formées de pixels ayant une forte valeur de probabilité dans les 4 classes K1 à K4 du réseau de neurones, correspondant à l'image de la FIG.9A. On voit ainsi comment le réseau de neurones permet de détecter les différentes régions d'intérêt spécifique correspondant aux classes K1 à K4.

Ainsi, il se trouve qu'un pixel d'intérêt peut avoir une forte valeur de probabilité, par exemple supérieure ou égale à 40 %, relativement à plus d'une classe. Or ce pixel d'intérêt ne doit se trouver en fait finalement que dans une seule classe de diagnostic, c'est-à-dire dans une seule image d'activation. Les autres valeurs fortes de probabilité qui lui ont été attribuées sont en réalité des fausses alarmes.

Ces fausses alarmes doivent être éliminées. A cet effet le procédé selon l'invention comporte une troisième phase.

## II.3/ TROISIEME PHASE CP3 DE SEGMENTATION EN 2 CLASSES

Le but de l'invention est finalement de déterminer les seules zones cancers K1, et de les séparer de tous les autres pixels référencés alors TT.

Cette opération est effectuée dans des moyens de calcul CP3. Il est recherché de sélectionner de manière efficace les pixels appartenant aux zones cancers, tous les pixels appartenant à ces zones cancers, mais que les pixels appartenant à ces zones, de manière à obtenir 100 % de vrais positifs, et bien entendu en n'omettant aucune zone cancer.

Selon une première méthode simple, on conserve comme zones-cancers, les régions formées du regroupement des pixels étiquetés dans la classe K1, ayant une valeur de probabilité supérieure à un seuil prédéterminé, par exemple 40 %, d'appartenir à cette classe. Et on sélectionne parmi ces régions, les zones ayant un diamètre supérieur ou égal à un seuil, par exemple 3 mm ou 4 mm. Dans cette méthode, les pixels qui ne répondent pas à ces deux conditions soit parce qu'ils sont isolés, soit parce que leur valeur de probabilité est trop faible, sont regroupés dans une classe notée TT de toutes les autres régions décrétées saines.

Selon une seconde méthode préférée, on sélectionne des zones à risques notées "zones suspectes" dans l'image J0, soit manuellement par le praticien, soit automatiquement par des moyens de calcul non décrits, dans lesquelles, on compte le nombre N des pixels, on effectue la somme des valeurs de probabilité PK1 des pixels relatives à la seule classe K1 de cancer, et on divise cette somme par le nombre N de pixels, ce qui fournit la valeur de probabilité moyenne des pixels, dans chaque "zone à risques" d'appartenir à la classe cancer K1. Si cette valeur de probabilité moyenne est supérieure à un seuil prédéterminé, par exemple 40 %, alors la "zone suspecte" est décrétée "zone cancer".

Cette seconde méthode fournit un meilleur résultat, c'est-à-dire fournit un plus grand nombre de vrais positifs TA détectés pour un même nombre de faux positifs FA (zones détectées à tord comme cancers), que la première méthode.

Les FIGs.8C et 9C montrent respectivement une image finale correspondant aux images des FIGs.8A et 9A, sur lesquelles une zone cancer trouvée à être délimitée pour mettre cette pathologie en évidence, comme aide au diagnostic.

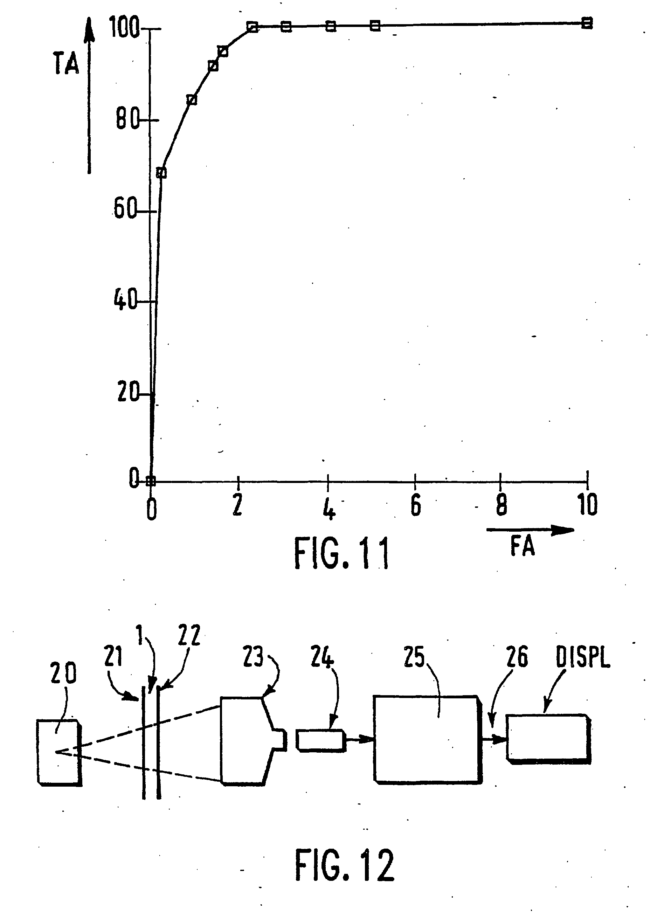

La courbe "ROC" (de l'anglais = Receiver Operating Curve) de la FIG.11 illustre les résultats obtenus par la présente méthode dans le mode préféré. Pour établir cette courbe, les conclusions fournies par la présente méthode concernant les zones cancers et zones saines sont vérifiées par des analyses de laboratoires par exemple par des biopsies. Selon la courbe de la FIG.11, sur 50 images analysées, on a trouvé 100 % de vrais positifs TA, pour 2 faux positifs FA, avec des zones cancers retenues supérieures ou égales à 3 mm.

LES DISPOSITIF ET SYSTEME

En référence avec la FIG.12, un système de radiographie numérisée comprend une source 20 de rayons X ou autre source de rayonnement, des plaques 21, 22 pour presser l'organe sein 1 de la patiente à radiographier, un dispositif intensificateur d'images 23 couplé à un tube vidéo 24 qui fournit des données à un système 25 de traitement pour numériser les images, relié à un microprocesseur. Ce dernier comprend plusieurs sorties dont une sortie 26 couplée à un moniteur DISPL pour la visualisation de l'image radiographique, ou image d'intensité, à tout stade du traitement.

En référence avec les diagrammes des FIG.1, 2A, 2B, 3 et 4, l'image numérique fournie par le système 25 est mémorisée dans des moyens de mémorisation MEM1, sous forme de données accessibles par le microprocesseur (non représenté). Ce dernier, en relation avec un poste d'ordinateur (non représenté) traite les données mémorisées en MEM1, de préférence selon le procédé décrit plus haut, pour détecter automatiquement des régions d'un type prédéterminé de cancers et pour fournir des images finales d'intensités munies de repères visuels, tels que des lignes délimitant lesdites régions de cancers comme montré à titre d'exemple sur les images des FIG.8C et 9C, qui peuvent être affichées par la commande de l'ordinateur par exemple sur un écran DISPL, ou peuvent dans un autre exemple être imprimées.

Le dispositif de traitement d'images pour détecter automatiquement des régions d'un type prédéterminé de cancer, comprend donc : un système d'acquisition (23, 24, 25) d'une image d'une région du corps humain ou animal, une mémoire de stockage MEM1 de l'image d'intensité J0, par exemple sous la forme d'une matrice bidimensionnelle de pixels ayant des valeurs d'intensité numérisées, des moyens de traitement automatique de cette image ayant accès à cette mémoire et des moyens d'affichage DISPL de ladite image avec des indications visibles pour repérer les régions détectées du type prédéterminé de cancer dans cette image.

Dans ce dispositif, en référence avec les FIG.1 à FIG.4, les moyens de traitement comprennent des premiers moyens de traitement pour générer, pour chaque pixel, un vecteur d'une pluralité de caractéristiques d'intensité, avec :

a) un ou des premiers moyens de filtrage orienté FP0, FP10A, FP10B pour appliquer chacun un opérateur gaussien G5, G5A, G10B pour fournir une ou des images lissées IC0 ou IC11A à IC16A, IC11B à IC16B à une ou plusieurs échelles,

b) un ou plusieurs deuxièmes moyens de filtrage orienté FP1 à FP6 ou FP10, FP20, FP30, FP40 pour appliquer un ou plusieurs opérateurs différentiels orientés, d'ordre 1 ou 2, invariants par rotation, sur chaque image lissée,

c) des moyens de calcul CP1 pour effectuer le regroupement des résultats des opérateurs fournissant les caractéristiques du vecteur recherché, relatif à chaque pixel d'intérêt ayant une adresse dans la matrice bidimensionnelle et des seconds moyens de traitement incluant :

d) un réseau de neurones NN pour recevoir à ses entrées E1 à Em, avec de préférence m = 54, pour chaque pixel concerné, le vecteur de caractéristiques relatif audit pixel et pour effectuer une classification dudit pixel à partir de son vecteur de caractéristiques, dans différentes classes telles que K1, K2, K3, K4 de probabilité d'appartenir à différentes régions de l'image, dont une classe K1 des pixels des régions de cancers, et une classe TT des autres régions,

e) des moyens de calcul CP2, CP3 pour construire une image finale IF segmentée en région du type prédéterminé de cancers et en autres régions.

De préférence, ce dispositif est appliqué à la détection automatique des régions de cancers du type "opacités" dans des mammographies du corps humain.

Dans des variantes, ce dispositif peut être appliqué à la détection automatique d'opacités dans des images de Tomographie ou dans des images obtenue par Résonnance Magnétique nucléaire.

**Revendications**

1.  Procédé de traitement d'image pour la détection. automatique de régions d'un type prédéterminé de cancer dans une image d'intensité d'une partie du corps humain ou animal, comprenant, pour un nombre de points d'une partie de ladite image, la détermination d'un lot, appelé vecteur, de composantes formées de valeurs caractéristiques dérivées de la distribution d'intensité dans ladite partie de l'image autour de chaque point, et la déterminaton, par classification de chaque point sur la base de son vecteur, de la probabilité que le point associé à ce vecteur appartienne à une région de cette partie d'image correspondant au type de cancer prédéterminé ou à une autre région.

2.  Procédé selon la revendication 1, comprenant une mise en évidence dans la partie de l'image d'intensité, des régions potentielles de cancers du type prédéterminé, incluant une sélection des points ayant un taux de probabilité excédant un seuil prédéterminé comme points appartenant à la classe des régions du type prédéterminé de cancer, un étiquetage de ces points pour les grouper en régions de cancers, et une segmentation de la partie d'intensité en deux classes de points, dont une classe de points des régions du type prédéterminé de cancer, et une classe de points des autres régions.

3.  Procédé selon l'une des revendications 1 ou 2, comprenant, pour générer ledit vecteur de valeurs caractéristiques d'intensité, l'application d'un ou plusieurs filtres pour transformer la partie d'image d'intensité en une ou des images lissées à une ou plusieurs résolutions respectivement, l'application d'un ou plusieurs filtres orientés, invariants par rotation, sur chaque image lissée, pour rehausser des variations d'intensité et faire ressortir des caractéristiques structurelles à chaque résolution, et le regroupement des résultats des filtres pour fournir des composantes du vecteur recherché.

4.  Procédé selon la revendication 3, dans lequel les filtres de lissage sont des opérateurs gaussiens, et les filtres orientés invariants par rotation sont des opérateurs différentiels d'ordre 1 ou 2 ou des compositions de ces opérateurs.

5.  Procédé selon la revendication 4, comprenant une première étape, incluant une première phase, avec une première sous-étape mise en oeuvre au moyen d'un opérateur gaussien pour fournir, à partir de l'image d'intensité, une image lissée à la résolution des régions de cancer recherchées, et avec une deuxième sous-étape mise en oeuvre au moyen d'opérateurs différentiels d'ordre 1 ou 2, invariants par rotation, appliqués chacun sur ladite image lissée, pour fournir des images de caractéristiques structurelles, ces opérateurs incluant :

    un opérateur de calcul des dérivées orientées d'ordre 1 qui fournit le module du gradient de l'intensité autour du point courant de l'image lissée ;
    des opérateurs de calcul des dérivées orientées d'intensité d'ordre 2 qui sélectionnent d'une part au même point, la valeur maximale positive parmi les dérivées orientées d'ordre 2, et si cette valeur ne peut être trouvée, qui affectent la valeur d'intensité zéro au point concerné et qui sélectionnent, d'autre part au même point, la valeur maximale négative parmi ces dérivées orientées d'ordre 2, et si cette valeur ne peut être trouvée, qui affectent la valeur d'intensité zéro au point concerné ;
    des opérateurs de calcul des dérivées orientées d'intensité d'ordre 2 qui sélectionnent, d'une part au même point, la valeur minimale positive parmi lesdites dérivées orientées d'ordre 2, et, si cette valeur ne peut être trouvée, qui affectent la valeur d'intensité zéro au point concerné et qui sélectionnent, d'autre part au même point, la valeur minimale négative parmi lesdites dérivées orientées d'ordre 2, et, si cette valeur ne peut être trouvée, qui affectent la valeur d'intensité zéro au point concerné,
    un opérateur de calcul du produit de la courbure au voisinage du point courant par le module du gradient d'intensité.

6.  Procédé selon la revendication 5, comprenant, dans la première étape, une seconde phase incluant :

    une première et/ou une seconde chaînes (A,B) de traitement avec une première sous-étape mise en oeuvre au moyen d'un opérateur gaussien pour fournir, à partir des images fournies par les opérateurs différentiels de la première phase, des nouvelles images lissées à la résolution des régions de cancer recherchées et/ou à la résolution des tissus enrobant les régions de cancer recherchées, et avec une seconde sous-étape mise en oeuvre au moyen d'opérateurs différentiels invariants par rotation, appliqués auxdites nouvelles images lissées pour fournir des images de caractéristiques structurelles, ces opérateurs incluant :
    un opérateur de calcul des dérivées orientées d'intensité d'ordre 1 qui fournit le module du gradient d'intensité au point courant desdites nouvelles images lissées,

un opérateur de calcul des dérivées orientées d'intensité d'ordre 2 qui fournit le Laplacien isotropique au même point,

un opérateur de calcul des dérivées orientées d'intensité, d'ordre 2, qui fournit une combinaison, invariante par rotation, des dérivées orientées d'ordre 2 au même point.

**7.** Procédé selon la revendication 7, dans lequel, dans la première étape, la seconde phase est mise en oeuvre en parallèle dans la première chaîne (A) et dans la seconde chaîne (B).

**8.** Procédé selon l'une des revendications précédentes, dans lequel l'image d'intensité est une image mammographique du corps humain.

**9.** Procédé selon la revendication 8, dans lequel a) la classification des points en 4 classes de probabilité incluant une classe de points de régions du type prédéterminé de cancer, une classe de points de régions opaques du sein interne, une classe de points de régions du sein périphérique, une classe de points des autres régions est effectuée par un réseau de neurones, et dans lequel b) la construction d'une image finale comprend une opération de seuillage appliquée au taux de probabilité des points d'appartenir à la classe des régions de cancer, une sélection des points ayant un taux de probabilité excédant ce seuil comme points appartenant à la classe des régions du type prédéterminé de cancer, un étiquetage de ces points pour les grouper en régions de cancers, une sélection des régions dont l'étendue dépasse un seuil de surface, et une segmentation de l'image d'intensité en deux classes incluant une classe de points des régions sélectionnées du type prédéterminé de cancer, et une classe de points des autres régions.

**10.** Dispositif de traitement d'images pour mettre en oeuvre chacune des étapes du procédé selon l'une des revendications 1 à 9, comprenant des moyens de traitement d'un nombre de points d'une partie de ladite image, pour déterminer un lot, appelé vecteur, de composantes formées de valeurs caractéristiques dérivées de la distribution d'intensité dans ladite partie de l'image autour de chaque point, et un système classificateur pour déterminer la probabilité que le point associé à ce vecteur appartienne à une région de cette partie d'image correspondant au type de cancer prédéterminé ou à une autre région.

**11.** Dispositif selon la revendication 10, comprenant aussi des moyens de mise en évidence dans l'image d'origine, des régions potentielles de cancers du type prédéterminé, incluant des moyens de sélection des points ayant un taux de probabilité excédant un seuil prédéterminé comme points appartenant à la classe des régions du type prédéterminé de cancer, d'étiquetage de ces points pour les grouper en régions de cancers, et de segmentation de l'image d'origine en deux classes de points, dont une classe de points des régions du type prédéterminé de cancer, et une classe de points des autres régions.

**12.** Dispositif selon la revendication 11 dans lequel les moyens pour générer le vecteur de caractéristiques d'intensité comprennent :

a) un ou des premiers moyens de filtrage orienté pour appliquer chacun un opérateur gaussien pour fournir une ou des images lissées à une ou plusieurs échelles respectivement,

b) un ou plusieurs deuxièmes moyens de filtrage orienté pour appliquer ultérieurement un ou plusieurs opérateurs différentiels, d'ordre 1 ou 2, invariants par rotation, sur chaque image lissée,

c) des moyens de calcul pour effectuer le regroupement des résultats des opérateurs pour fournir les caractéristiques du vecteur de caractéristiques d'intensité recherché, relatif à chaque point,

et le classificateur est un réseau de neurones arrangé pour recevoir à ses entrées, pour chaque point concerné, le vecteur de caractéristiques relatif audit point et pour effectuer une classification dudit point à partir de son vecteur de caractéristiques, dans différentes classes de probabilité d'appartenir à différentes régions de l'image, dont une classe des points des régions de cancers, et une classe des autres régions.

**13.** Dispositif de traitement d'images selon l'une des revendications 10 à 12, compris dans un système d'imagerie médicale pour détecter automatiquement des régions d'un type prédéterminé de cancer, comprenant un système d'acquisition d'une image d'une région du corps humain ou animal, une mémoire de stockage de l'image sous la forme d'une matrice bidimensionnelle de pixels ayant des valeurs d'intensité numérisées, un dispositif de traitement automatique de cette image ayant accès à cette mémoire et des moyens d'affichage de ladite image avec des indications visibles pour repérer les régions détectées du type prédéterminé de cancer dans cette image.

**14.** Dispositif selon la revendication 13, dans lequel le système d'imagerie médicale est du type radiologique par rayons X, ou Tomographie, ou de Résonnance Magnétique Nucléaire.

**Patentansprüche**

**1.** Bildverarbeitungsverfahren zur automatischen Erkennung von Bereichen eines vorbestimmten Krebstyps in einem Intensitätsbild eines Teils des menschlichen oder tierischen Körpers, das Folgendes umfasst: für eine Anzahl von Punkten eines Teils des genannten Bildes die Bestimmung eines Satzes, genannt Vektor, von Komponenten, die aus Kenndaten gebildet sind, die von der Intensitätsverteilung in dem genannten Teil des Bildes um jeden Punkt abgeleitet sind, und die Bestimmung durch Klassifizierung jedes Punktes auf der Basis seines Vektors der Wahrscheinlichkeit, dass der diesem Vektor zugeordnete Punkt zu einem Bereich dieses Bildteils, der dem vorbestimmten Krebstyp entspricht, oder zu einem anderen Bereich gehört.

**2.** Verfahren nach Anspruch 1, dass die Hervorhebung der potentiellen Bereiche des vorbestimmten Krebstyps in dem Teil des Intensitätsbildes umfasst und Folgendes einschließt: eine Auswahl der Punkte, die eine Wahrscheinlichkeitsquote aufweisen, die einen vorher festgelegten Schwellenwert übersteigt, als Punkte, die zu der Klasse der Bereiche des vorbestimmten Krebstyps gehören; eine Kennzeichnung dieser Punkte, um sie in Krebsbereichen zusammenzufassen, und eine Unterteilung des Teils des Intensitätsbildes in zwei Klassen von Punkten, von denen eine Klasse von Punkten Bereiche des vorbestimmten Krebstyps und eine Klasse von Punkten andere Bereiche angibt.

**3.** Verfahren nach einem der Ansprüche 1 oder 2, das zur Erzeugung des genannten Vektors von Intensitätskenndaten Folgendes umfasst: die Anwendung eines oder mehrerer Filter, um den Teil des Intensitätsbildes in ein oder mehrere geglättete Bilder mit einer bzw. mehreren Auflösungen umzuwandeln; die Anwendung eines oder mehrerer ausgerichteter, unveränderlicher Filter durch Rotation auf jedes geglättete Bild, um Intensitätsschwankungen zu erhöhen und Strukturmerkmale bei jeder Auflösung hervorzuheben, und die Zusammenfassung der Ergebnisse der Filter, um die Komponenten des gesuchten Vektors zu liefern.

**4.** Verfahren nach Anspruch 3, in dem die Glättungsfilter Gaußsche Operatoren und die ausgerichteten, unveränderlichen Filter durch Rotation Differentialoperatoren erster oder zweiter Ordnung oder Kombinationen dieser Operatoren sind.

**5.** Verfahren nach Anspruch 4, das Folgendes umfasst: einen ersten Schritt, der eine erste Phase mit einem ersten mittels eines Gaußschen Operatoren durchgeführten Teilschritt, um ausgehend vom Intensitätsbild ein geglättetes Bild mit der Auflösung der gesuchten Krebsbereiche zu liefern, und mit einem zweiten mittels Differentialoperatoren erster und zweiter Ordnung, unveränderlich durch Rotation, einschließt, die jeweils auf das geglättete Bild angewendet werden, um Bilder mit Strukturmerkmalen zu liefern, wobei diese Operatoren Folgendes umfassen:

einen Operator zum Berechnen der ausgerichteten Ableitungen erster Ordnung, der das Modul des Intensitätsgradienten um einen aktuellen Punkt des geglätteten Bildes liefert;
Operatoren zum Berechnen der ausgerichteten Intensitätsableitungen zweiter Ordnung, die einerseits am selben Punkt den positiven Maximalwert aus den ausgerichteten Ableitungen zweiter Ordnung auswählen, und wenn dieser Wert nicht zu finden ist, dem betreffenden Punkt den Intensitätswert Null zuordnen, und die andererseits am selben Punkt den negativen Maximalwert aus diesen ausgerichteten Ableitungen zweiter Ordnung auswählen, und wenn dieser Wert nicht zu finden ist, dem betreffenden Punkt den Intensitätswert Null zuordnen;
Operatoren zum Berechnen der ausgerichteten Intensitätsableitungen zweiter Ordnung, die einerseits am selben Punkt den positiven Minimalwert aus den ausgerichteten Ableitungen zweiter Ordnung auswählen, und wenn dieser Wert nicht zu finden ist, dem betreffenden Punkt den Intensitätswert Null zuordnen, und die andererseits am selben Punkt den negativen Minimalwert aus diesen ausgerichteten Ableitungen zweiter Ordnung auswählen, und wenn dieser Wert nicht zu finden ist, dem betreffenden Punkt den Intensitätswert Null zuordnen;
einen Operator zum Berechnen des Produktes der Krümmung in der Nachbarschaft des aktuellen Punktes und des Moduls des Intensitätsgradienten.

**6.** Verfahren nach Anspruch 5, das in dem ersten Schritt eine zweite Phase umfasst, die Folgendes einschließt:

eine erste bzw. eine zweite Ablaufkette (A, B) der Verarbeitung mit einem ersten mittels eines Gaußschen Operators durchgeführten Teilschritt, um ausgehend von den von den Differentialoperatoren der ersten Phase gelieferten Bildern neue geglättete Bilder mit der Auflösung der gesuchten Krebsbereiche bzw. der Auflösung des die gesuchten Krebsbereiche umgebenden Gewebes zu liefern, und mit einem zweiten mittels unveränderlichen Differentialoperatoren durch Rotation durchgeführten Teilschritt, die auf die genannten neuen geglätteten Bilder angewendet werden, um Bilder mit Strukturmerkmalen zu liefern, wobei diese Operatoren Folgendes umfassen:

einen Operator zum Berechnen der ausgerichteten Intensitätsableitungen erster Ordnung, der das Modul des Intensitätsgradienten am aktuellen Punkt der genannten neuen geglätteten Bilder liefert,
einen Operator zum Berechnen der ausgerichteten Intensitätsableitungen zweiter Ordnung, der den isotropen Laplace-Operator am selben Punkt liefert,
einen Operator zum Berechnen der ausgerichteten Intensitätsableitungen zweiter Ordnung, der eine unveränderliche Kombination durch Rotation der ausgerichteten Ableitungen zweiter Ordnung am selben Punkt liefert.

7. Verfahren nach Anspruch 7, in dem in dem ersten Schritt die zweite Phase parallel in der ersten Ablaufkette (A) und der zweiten Ablaufkette (B) durchgeführt wird.

8. Verfahren nach einem der vorhergehenden Ansprüche, in dem das Intensitätsbild ein Mammographiebild des menschlichen Körpers ist.

9. Verfahren nach Anspruch 8, in dem a) die Klassifizierung der Punkte in 4 Wahrscheinlichkeitsklassen durch ein neuronales Netz erfolgt, wobei eine Klasse mit Punkten von Bereichen des vorbestimmten Krebstyps, eine Klasse mit Punkten von undurchlässigen Bereichen der inneren Brust, eine Klasse mit Punkten von Bereichen der umgebenden Brust und eine Klasse mit Punkten von anderen Bereichen existieren; und in dem b) die Erstellung eines endgültigen Bildes Folgendes umfasst: einen Vorgang der Schwellenwertbildung, die auf die Wahrscheinlichkeitsquote der Punkte angewendet wird, dass sie zu der Klasse der Krebsbereiche gehören; eine Auswahl der Punkte mit einer diesen Schwellenwert überschreitenden Wahrscheinlichkeitsquote als Punkte, die zu der Klasse der Bereiche des vorbestimmten Krebstyps gehören; eine Kennzeichnung dieser Punkte, um sie in Krebsbereiche zusammenzufassen; eine Auswahl der Bereiche, deren Ausdehnung einen Flächenschwellenwert überschreitet; und eine Unterteilung des Intensitätsbildes in zwei Klassen, von denen die eine eine Klasse mit Punkten der ausgewählten Bereiche des vorbestimmten Krebstyps und die andere eine Klasse mit Punkten der anderen Bereiche ist.

10. Bildverarbeitungseinrichtung zur Durchführung jedes der Schritte des Verfahrens nach einem der Ansprüche 1 bis 9, die Folgendes umfasst: Mittel zur Verarbeitung einer Anzahl von Punkten eines Teils des genannten Bildes zur Bestimmung eines Satzes, genannt Vektor, von Komponenten, die aus Kenndaten gebildet sind, die von der Intensitätsverteilung in dem genannten Teil des Bildes um jeden Punkt abgeleitet sind, und ein Klassifizierungssystem, um die Wahrscheinlichkeit zu bestimmen, dass der diesem Vektor zugeordnete Punkt zu einem Bereich dieses Bildteils, der dem vorbestimmten Krebstyp entspricht, oder zu einem anderen Bereich gehört.

11. Einrichtung nach Anspruch 10, die ferner Folgendes umfasst: Mittel zum Hervorheben im Originalbild der potentiellen Bereiche des vorbestimmten Krebstyps, die Mittel einschließen zum Auswählen der Punkte, die eine Wahrscheinlichkeitsquote aufweisen, die einen vorher festgelegten Schwellenwert übersteigt, als Punkte, die zu der Klasse der Bereiche des vorbestimmten Krebstyps gehören, zum Kennzeichnen dieser Punkte, um sie in Krebsbereichen zusammenzufassen, und zum Unterteilen des Originalbildes in zwei Klassen von Punkten, von denen eine Klasse von Punkten Bereiche des vorbestimmten Krebstyps und eine Klasse von Punkten andere Bereiche angibt.

12. Einrichtung nach Anspruch 11, in der die Mittel zum Erzeugen des Vektors mit Intensitätskenndaten Folgendes umfassen:

a) ein oder mehrere ausgerichtete Filtermittel, um jeweils einen Gaußschen Operator anzuwenden, um ein oder mehrere geglättete Bilder mit einer bzw. mehreren Maßstäben zu liefern;
b) ein oder mehrere zweite ausgerichtete Filtermittel, um danach einen oder mehrere Differentialoperatoren erster oder zweiter Ordnung, unveränderlich durch Rotation, auf jedes geglättete Bild anzuwenden;
c) Rechenmittel, um die Ergebnisse der Operatoren zusammenzufassen, um die Kenndaten des gesuchten Vektors mit Intensitätskenndaten zu jedem Punkt zu liefern, und das Klassifizierungssystem ein neuronales Netz ist, das so ausgelegt ist, dass es an seinen Eingängen für jeden betreffenden Punkt den Kenndatenvektor zu dem genannten Punkt empfängt und eine Klassifizierung des genannten Punktes ausgehend von seinem Kenndatenvektor in unterschiedliche Klassen der Wahrscheinlichkeit durchführt, dass er zu verschiedenen Bereichen des Bildes gehört, wobei eine Klasse die Punkte der Krebsbereiche und eine Klasse die anderen Bereiche beinhaltet.

13. Bildverarbeitungseinrichtung nach einem der Ansprüche 10 bis 12, die in einem medizinischen optischen Abbildungssystem enthalten ist, um automatisch Bereiche eines vorbestimmten Krebstyps zu erkennen, welches Folgendes umfasst: ein System zum Erfassen eines Bildes eines Bereichs des menschlichen oder tierischen Körpers, einen Speicher für das Bild in Form einer zweidimensionalen Matrix aus Pixeln mit digitalisierten Intensitätswerten; eine Einrichtung zum automatischen Verarbeiten dieses Bildes mit Zugriff auf diesen Speicher und Mittel zum Anzeigen des genannten Bildes mit sichtbaren Angaben, um die erkannten Bereiche des vorbestimmten Krebstyps in diesem Bild zu kennzeichnen.

14. Einrichtung nach Anspruch 13, in der das medizinische optische Abbildungssystem ein Röntgen-, Tomographie- oder Kemspinresonanzsystem ist.

**Claims**

1. An image processing method for automatic detection of regions of a predetermined type of cancer in an intensity image of a part of a human or animal body, which method includes, for a number of points of a part of said image, the determination of a set, referred to as a vector, of components formed by characteristic values derived from the intensity distribution around each point in said part of the image, and determination, by classification of each point on the basis of its vector, the probability of the point associated with said vector belonging to a region of said part of the image which corresponds to the predetermined type of cancer or to another region.

2. A method as claimed in Claim 1, which includes the reproduction, in the part of the intensity image, of potential regions of cancer of the predetermined type, including a selection of points having a probability rate exceeding a predetermined threshold as points belonging to the class of regions of the predetermined type of cancer, labeling of these points in order to group these points in cancer regions, and segmentation of the intensity part into two classes of points, one class being a class of points of regions of the predetermined type of cancer whereas the other class is a class of points of the other regions.

3. A method as claimed in one of the Claims 1 or 2 which includes, in order to generate said vector of characteristic intensity values, the application of one or several filters so as to transform the part of the intensity image into one or more smoothed images with one or several resolutions, respectively, the application of one or several rotation-invariant, oriented filters to each smoothed image in order to enhance intensity variations and to accentuate structural characteristics with each resolution, and the grouping of the filter results in order to supply the components of the vector searched.

4. A method as claimed in Claim 3, in which the smoothing filters are Gaussian operators and the rotation-invariant oriented filters are first or second-order differential operators or compositions of these operators.

5. A method as claimed in Claim 4 which comprises a first step, including a first phase, with a first sub-step which is carried out by means of a Gaussian operator in order to produce, on the basis of the intensity image, a smoothed image with the resolution of the cancer regions searched, and with a second sub-step which is carried out by means of rotation-invariant first or second-order differential operators, each of which is applied to said smoothed image in order to produce images of structural characteristics, said operators including:

   - an operator for calculating first-order oriented derivatives, yielding the modulus of the gradient of the intensity around the current point of the smoothed image;
   - operators for calculating second-order intensity oriented derivatives which select on the one hand at the same point the maximum positive value from the second-order oriented derivatives and, if this value cannot be found, assign the intensity value zero to the relevant point, and on the other hand select at the same point the maximum negative value from said second-order oriented derivatives and, if this value cannot be found, assign the intensity value zero to the relevant point;

- operators for calculating second-order intensity oriented derivatives which select on the one hand at the same point the minimum positive value from said second-order oriented derivatives and, if said value cannot be found, assign the intensity value zero to the relevant point, and on the other hand select at the same point the minimum negative value from said second-order oriented derivatives and, if this value cannot be found, assign the intensity value zero to the relevant point;
- an operator for calculating the product of the curvature at the vicinity of the current point and the modulus of the intensity gradient.

6. A method as claimed in Claim 5 which comprises, in the first step, a second phase which includes:

- a first and/or a second processing chain (A, B) with a first sub-step which is executed by means of a Gaussian operator in order to supply, on the basis of images produced by the differential operators of the first phase, new smoothed images with the resolution of the cancer regions searched and/or the resolution of the tissues surrounding the cancer regions searched, and with a second sub-step which is executed by means of rotation-invariant differential operators which are applied to said new smoothed images in order to produce images of structural characteristics, said operators including:

- an operator for calculating first-order intensity oriented derivatives which produces the modulus of the intensity gradient at the current point of said new smoothed images;
- an operator for calculating second-order intensity oriented derivatives which produces the isotropic Laplacian at the same point,
- an operator for calculating second-order intensity oriented derivatives which produces a rotation-invariant combination of second-order oriented derivatives at the same point.

7. A method as claimed in Claim 6, in which the second phase of the first step is executed in parallel in the first chain (A) and in the second chain (B).

8. A method as claimed in one of the preceding Claims, in which the intensity image is a mammographic image of the human body.

9. A method as claimed in Claim 8, in which a) the classification of the points in four classes of probability, including a class of points of regions of the predetermined type of cancer, a class of points of opaque regions of the interior of the breast, a class of points of regions of the peripheral breast, and a class of points of other regions is performed by a neural network, and in which b) the composition of a final image includes a thresholding operation which is applied to the rate of probability of points belonging to the class of regions of cancer, selection of points having a probability rate exceeding said threshold as points belonging to the class of regions of the predetermined type of cancer, labeling of said points in order to group the points in regions of cancer, selection of regions whose extent exceeds a surface threshold, and segmentation of the intensity image into two classes, including one class of points of selected regions of the predetermined type of cancer and one class of points of other regions.

10. An image processing device for carrying out each of the steps of the method claimed in one of the Claims 1 to 9, including means for processing a number of points of a part of said image, for determining a set, referred to as a vector, of components formed by characteristic values derived from the intensity distribution around each point in said part of the image, and a classification system for determining the probability of the point associated with said vector belonging to a region of said part of the image which corresponds to the predetermined type of cancer, or to another region.

11. A device as claimed in Claim 10 which also includes means for reproducing in the original image potential regions of cancer of the predetermined type, including means for selecting points having a probability rate which exceeds a predetermined threshold as points which belong to the class of the regions of the predetermined type of cancer, for labeling said points in order to group these points in regions of cancer, and for segmenting the original image into two classes of points, one of which is a class of points of regions of the predetermined type of cancer while the other class is a class of points of the other regions.

12. A device as claimed in Claim 11, in which the means for generating the vector of intensity characteristics include:

a) one or more first means for oriented filtering in order to apply a respective Gaussian operator so as to produce one or more smoothed images with one or several scales, respectively,

b) one or more second oriented filtering means for ultimately applying one or more rotation-invariant first-order or second-order differential operators to each smoothed image;

c) calculation means for grouping the results of the operators so as to produce the characteristics of the intensity characteristic vector searched for each point,

the classification system being a neural network which is arranged to receive at its inputs, for each point concerned, the characteristic vector relating to said point, and to perform a classification of said point on the basis of its characteristic vector in different classes of probability of belonging to different regions of the image, one class being the points of regions of cancer and one class relating to the other regions.

13. An image processing device as claimed in one of the claims 10 to 12, included in a medical imaging system for automatic detection of regions of a predetermined type of cancer, including a system for the acquisition of an image of a region of a hurnan or animal body, a memory for the storage of the image in the form of a two-dimensional matrix of pixels having digitized intensity values, a device for the automatic processing of said image which has access to said memory, and means for displaying said image with visible indications so as to mark the detected regions of the predetermined type of cancer in said image.

14. A device as claimed in Claim 13, in which the medical imaging system is an X-ray, tomography or magnetic resonance imaging system.

FIG. 1

FIG. 2A

FIG. 2B

F1   F11A   F21A   F31A   F41A   F11B   F21B   F31B   F41B
F6   F16A   F26A   F36A   F46A   F16B   F26B   F36B   F46B

C P 1

E1   E10   E19   E28   E37   E46
E9   E18   E27   E36   E45   E54

## FIG. 3

$O_1 \rightarrow W_1$
$O_2 \rightarrow W_2 \rightarrow \Sigma \rightarrow \boxed{Th} \rightarrow O_S$
$O_n \rightarrow W_n$

N

## FIG. 5A

E1 → N
E2 → N → N → N → K1
          N → N → K2
          N → N → K3
Em → N → N → N → Kk

NN

## FIG. 5B

FIG. 4

FIG. 6A

FIG. 6B

FIG. 6C

FIG. 7A

FIG. 7F

FIG. 7B

FIG. 7C

FIG. 7D

FIG. 7E

FIG. 8A

FIG. 8B

FIG. 8C

FIG. 9A

FIG. 9B

FIG. 9C

FIG. 10A

FIG. 10B

FIG. 10C

FIG. 11

FIG. 12